# EUROPEAN PATENT SPECIFICATION

(11) **EP 0 467 577 B1**
(45) Date of publication and mention of the grant of the patent: **04.09.1996**
(21) Application number: 91306226.1
(22) Date of filing: 09.07.1991
(51) Int. Cl.: G06F 15/80, G06T 1/00, H03M 1/12, G06T 5/00

(54) **Video image processing apparatus**
Videobildverarbeitungsanlage
Dispositif de traitement d'images vidéo

(30) Priority: 16.07.1990 US 553995
(43) Date of publication of application: 22.01.1992
(73) Proprietor: SONY CORPORATION, Tokyo 141 (JP); CALIFORNIA INSTITUTE OF TECHNOLOGY, Pasadena California 91125 (US)
(72) Inventor: Kobayashi, Seiji, c/o Patents Div., Sony Corp., Tokyo 141 (JP); Psaltis, Demetri, c/o Dep. of El. Eng., Pasadena, California 91125 (US)
(74) Representative: Cotter, Ivan John

(56) References cited:
- US-A- 4 926 180
- 1989 INTERNATIONAL CONFERENCE ON ACOUSTICS, SPEECH, AND SIGNAL PROCESSING 23 May 1989, pages 1787 - 1790 D. ANASTASSIOU ET AL 'Image halftoning and reconstruction using a neural network'
- PATENT ABSTRACTS OF JAPAN vol. 12, no. 111 (E-598)8 April 1988 & JP-A-62 242 422
- PATENT ABSTRACTS OF JAPAN vol. 14, no. 264 (P-1057)7 June 1990 & JP-A-20 72 491

## Description

This invention relates to video image processing apparatus.

When an analogue video image is converted to a binary value, the number of picture elements (pixels) which form the analogue video image are increased, for example, to twice the number of pixels in the vertical and horizontal directions, so that each pixel is now expressed by four small pixels. As a result, five gradations are possible for each set of four small pixels, that is, the four small pixels are either all white, one pixel is black, two pixels are black, three pixels are black, or all four pixels are black. The pixels of the analogue video image are compared with four threshold values and converted to respective expressions of the five gradations in response to the compared outputs.

If conversion or quantization is simply performed as described above, the gradation of the video image changes in a step-wise manner thereby producing a so-called quasi-contour, and resulting in considerable degradation of the quality of the video image.

As a result, a prior proposal has been made to remove the quasi-contour by mixing the analogue video image with a desired noise component having no correlation to the analogue video image. However, this method results in a lower signal-to-noise (S/N) ratio of the video image, so that a good image quality is not obtained.

Moreover, when a so-called computer hologram is formed, it is supplied in binary form although it is formed from an analogue value. As a result, quantization noise occurs which causes the S/N ratio of a reproduced picture to be considerably deteriorated.

1989 International Conference on Acoustics, Speech and Signal Processing, 23 May 1989, page 1787-1790; D Anastassiou et al "Image halftoning and reconstruction using a neural network" discloses a system utilizing a neural network to minimize a frequency-weighted mean square error criterion to perform grayscale to halftone conversion.

According to the present invention there is provided a video image processing apparatus for converting an analogue video image into a binary video image, the apparatus comprising:
input means for receiving said analogue video image;
sampling means for sampling the received analogue video image;
a neural network circuit having a plurality of neurons which are connected together through respective synapses;
setting means for setting a predetermined function;
first computing means for computing respective threshold values for each of said neurons in said neural network circuit on the basis of the sampled value of the video image and said predetermined function; and second computing means for computing respective coupling coefficients for each of said synapses of said neural network circuit on the basis of said predetermined function;
said neural network circuit processing said threshold values and said coupling coefficients so as to form said binary video image;
   characterized in that the input analogue video image is a computer hologram and said predetermined function is a window function indicative of a range of a desired image of a reproduced video image which results from Fourier-transforming said computer hologram.

Viewed from another aspect the invention provides a video image processing apparatus for converting an analogue video image into a binary video image, the apparatus comprising:
input means for receiving said analogue video image;
sampling means for sampling the received analogue video image;
a neural network circuit having a plurality of neurons which are connected together through respective synapses;
setting means for setting a predetermined function;
first computing means for computing respective threshold values for each of said neurons in said neural network circuit on the basis of the sampled value of the video image and said predetermined function; and second computing means for computing respective coupling coefficients for each of said synapses of said neural network circuit on the basis of said predetermined function;
said neural network circuit processing said threshold values and said coupling coefficients so as to form said binary video image;
   characterized in that the input analogue video image is a computer hologram and said predetermined function has a frequency characteristic which corresponds to that of a human's eyes.

The invention will now be described by way of example with reference to the accompanying drawings, throughout which like parts are referred to by like references, and in which:
Figure 1 is a block diagram of an embodiment of video image processing apparatus according to the present invention;
Figure 2A is a schematic diagram showing an example of a Hopfield type neural network circuit;
Figure 2B is a schematic diagram showing an arrangement of neurons;
Figure 3 is a diagram for explaining a neural network circuit;
Figure 4 is a diagram showing an example of a binary video image derived by a prior method;
Figure 5 is a diagram showing an example of a binary video image derived by a video image processing apparatus according to the present invention;
Figure 6A is a diagram showing a prior example of a reproduced picture of a computer hologram; and
Figure 6B is a diagram showing an example of a reproduced picture of a computer hologram using an embodiment of the present invention.

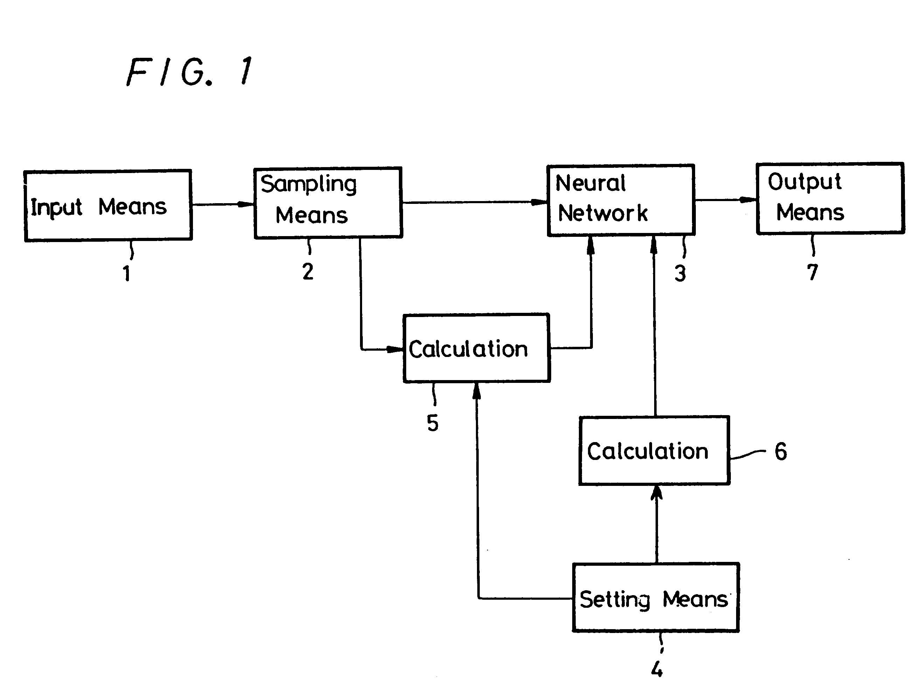

Referring to Figure 1, an analogue video image signal is supplied through an analogue video image input device 1 to a sampling device 2, in which it is sampled horizontally and vertically in a manner similar to that used in television scanning, to extract values of respective pixels.

A neural network circuit 3, for example, a Hopfield type neural network circuit which will be more fully described below, is preferably provided with four times as many neurons as the number of sampled pixels, corresponding to the small pixels in the previously described prior conversion.

Also shown in Figure 1 is a function setting device 4 in which a predetermined function is set which, for example, has a binary frequency which corresponds to a frequency characteristic of a human's eyes. The function set in the function setting device 4 and the values of respective pixels sampled by the sampling device 2 are supplied to a computing device 5 which computes threshold values for respective neurons of the neural network circuit 3. The function set in the function setting device 4 is also supplied to a computing device 6 which computes coupling coefficients for synapses of the neural network circuit 3.

Processing is performed in the neural network circuit 3, and converged values formed in the respective neurons are supplied to an output device 7 as an output binary video image signal.

Alternatively, the value of each pixel sampled by the sampling device 2 may be compared with a desired threshold value whereupon the compared output may be supplied to each neuron of the neural network circuit 3 as an initial value.

As a result, the input analogue video image from the input device 1 is converted to a binary value.

More specifically, assume that a human's image focusing system is incoherent. A resultant image g₍ₘ₎ is provided by multiplying an original video image ĝ₍ₘ₎ by a filter having a characteristic W_{(f)} of a human's eyes, this being basically a low-pass filter characteristic.

Substituting the Fourier-transform of W_{(f)}, which is represented as w₍ₘ₎, yields the following equation (1):${\hat{\text{g}}}_{\text{(m)}} {\text{= g(}}_{\text{m}} {\text{) ∗ w}}_{\text{(m)}}$ where * represents the convolution.

On the other hand, assume that µ₍ₘ₎ represents a binary video image and αµ̂₍ₘ₎ represents the binary video image as focused on the retina of a human's eyes, in which α represents a coefficient selected by the video image. µ̂₍ₘ₎ may be expressed as:${\hat{\text{µ}}}_{\text{(m)}} {\text{= µ}}_{\text{(m)}} {\text{∗w}}_{\text{(m)}}$

An embodiment of the present invention converts an analogue video image into a binary value, so that the difference, as formed on the retina of a human's eyes, between the binary video image and the original video image is minimized.

An error energy E may be defined as:

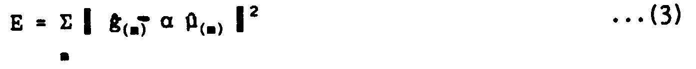

Substituting equation (2) into the equation (3) yields:

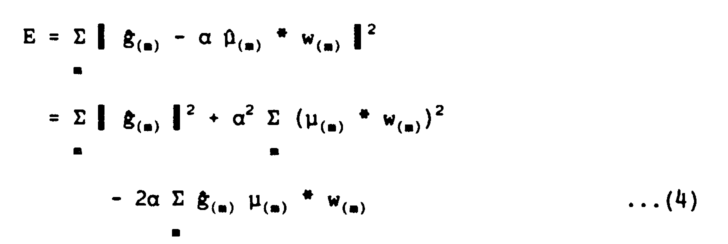

Further, assume that:

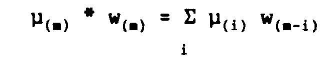

Substituting the above expression in equation (4) yields the following equation (5):

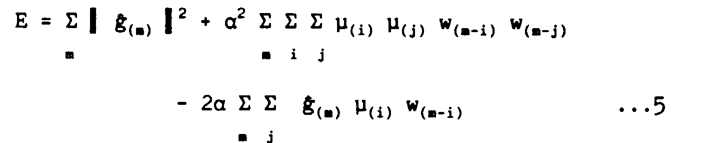

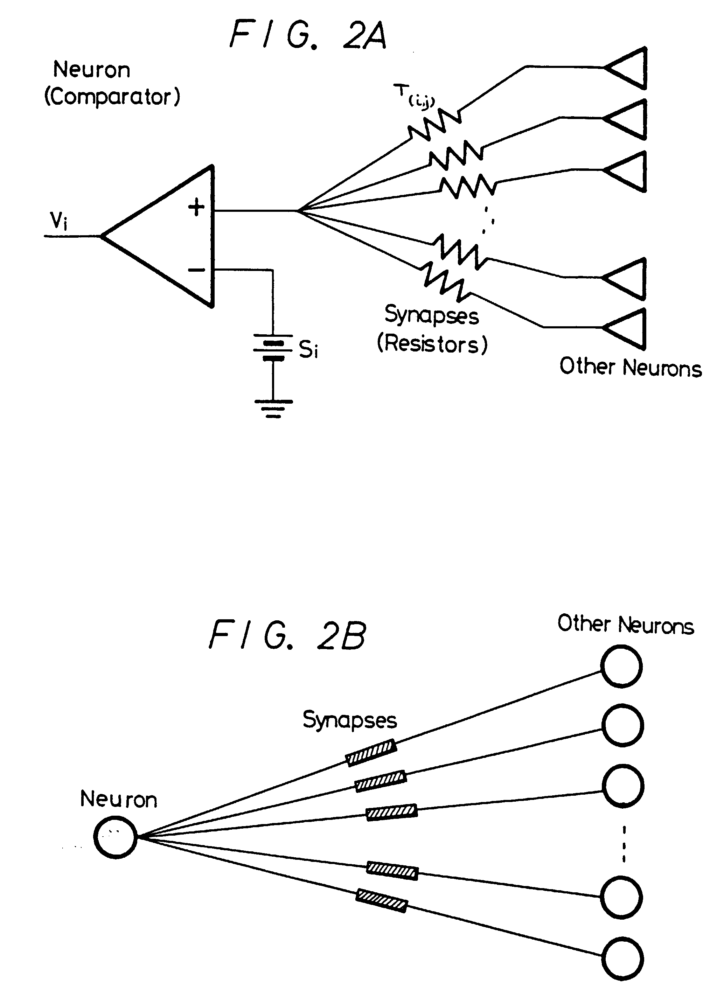

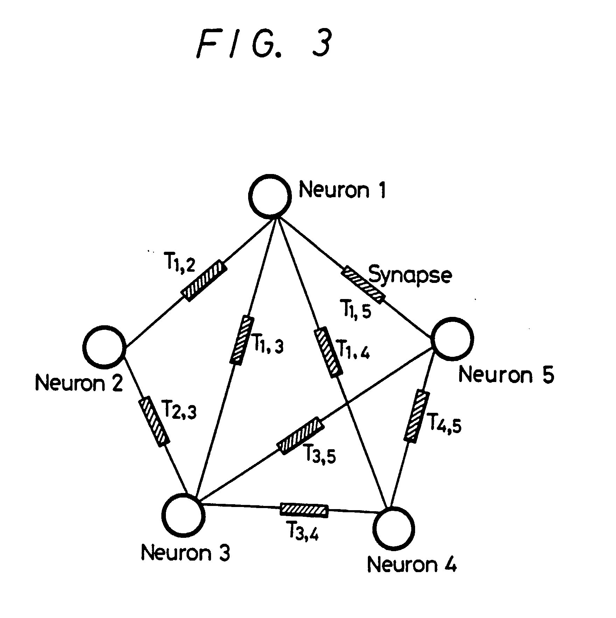

Further assuming that: 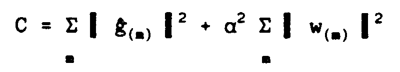 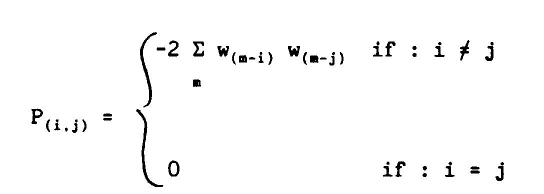 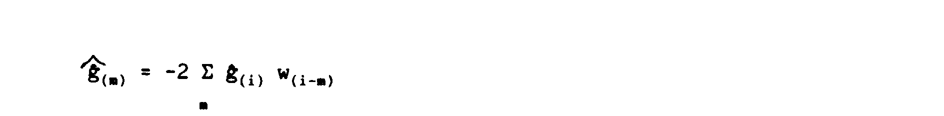 then, substituting the above expressions into equation (5) produces the following expression for the error energy E: 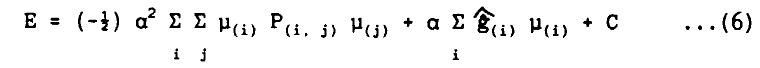 The Hopfield type neural network circuit 3 may, for example, be constructed as shown in Figure 2A, in which a neuron is formed as a comparator, and synapses are formed as resistors (see US patent specification US-A-4 660 166 and US-A-4 719 591). In this situation if S₍ᵢ₎ is a threshold value of a neuron, V₍ᵢ₎ is an output of the neural network circuit, and T_{(i, j)} is a coupling coefficient between respective neurons. The output V₍ᵢ₎ may be expressed as: 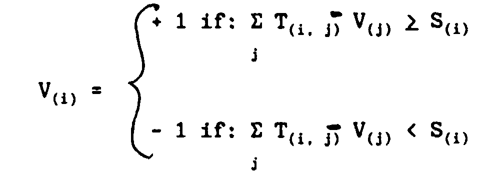 This circuit may be schematically represented as in Figure 2B. If, however, five neurons are provided, then the neural network circuit is constructed as shown in Figure 3.

If the coupling coefficient of synapses which return to the same neuron is 0 and the coupling coefficients between the neurons are equal to each other, then the neural network circuit shown in Figure 3 operates so as to minimize the error energy E which, in turn, may be expressed as:

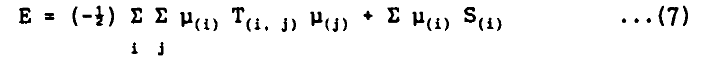

Accordingly, as is to be appreciated from equations 6 and 7, if in the above-described apparatus the threshold values S₍ᵢ₎ of respective neurons in the neural network circuit 3 are computed by the computing device 5 on the basis of the value g₍ₘ₎ sampled by the sampling device 2 and the function w₍ₘ₎ set in the setting device 4, and the coupling coefficients T_{(i, j)} of respective synapses of the neural network circuit 3 are computed by the computing device 6, the analogue video image is converted into a binary value which has a relatively minimal error as observed on the retina of a human's eyes.

In a preferred embodiment of the above described apparatus, the calculations required in the neural network circuit 3 are performed by a computer.

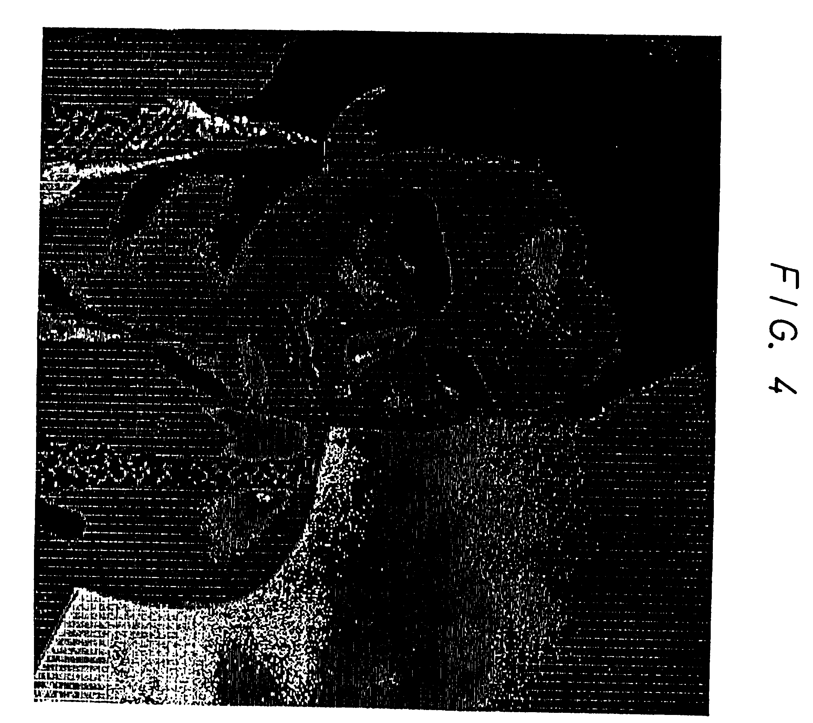

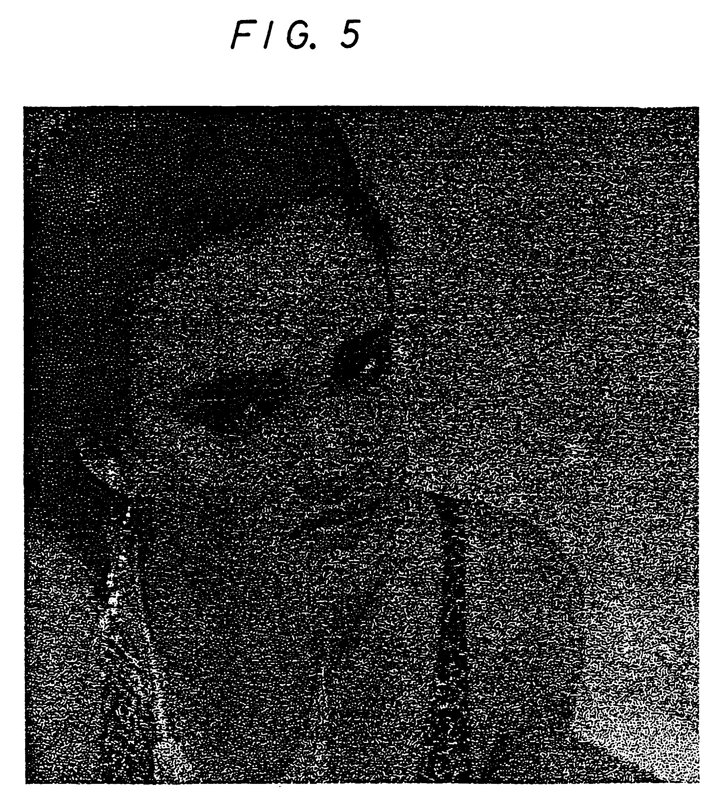

Figures 4 and 5 show actual examples of binary value video images in which an original picture having 480 x 480 pixels is converted into a binary video image having 960 x 960 pixels. More specifically, Figure 4 shows an example of a binary video image produced in accordance with a prior method, whereas Figure 5 shows a binary video image of excellent quality formed by the apparatus of the present invention.

The formation of a computer hologram will now be described.

In formulating a computer hologram, video image information is Fourier-transformed and the Fourier-transformed analogue value is converted into a corresponding binary value, which is then recorded as a hologram. Accordingly, the video image Fourier-transformed represents a hologram spectrum. Therefore the computer hologram converts an analogue waveform Fourier-transformed into a binary value in which the hologram spectrum represents a desired portion. However in the prior art, it is frequently observed that, if an analogue video image is converted into a binary value by a simple slice level, quantization noise occurs which causes the S/N ratio to be deteriorated.

Therefore, assume that G₍ₖ₎ represents a signal on a spectrum surface, that is, a reproduced video image. Further, assume that an area from which noise is to be removed on the spectrum surface can be expressed by a window function W₍ₖ₎ which may, for example, be expressed as: 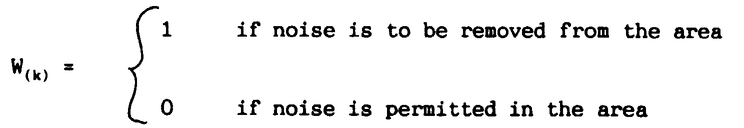 Further, assume that noise is to be removed from a portion in which the signal G₍ₖ₎ is defined. That is:${\text{W}}_{\text{(k)}} {\text{= 1 if G}}_{\text{(k)}} \text{≠ 0}$ g₍ₘ₎ represents the Fourier-transform of the signal G₍ₖ₎, and since g₍ₘ₎ is typically a complex number, it cannot be recorded directly. Therefore, instead of g₍ₘ₎,${\text{b}}_{\text{(m)}} \text{∈ {+1, -1}}$ is recorded. As a result, a signal appearing on the spectrum surface becomes B₍ₖ₎, instead of the ideal signal G₍ₖ₎, in which B₍ₖ₎ is the Fourier-transform of b₍ₘ₎.

In the present case the intention is to make b₍ₘ₎ such that the difference between B₍ₖ₎ and G₍ₖ₎ is minimized.

Accordingly, the error energy E is defined as follows: 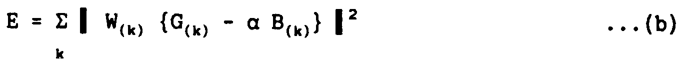 According to Parseval's theorem, the above-mentioned definition yields: 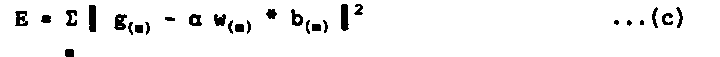 In this case, it is assumed that G₍ₖ₎ and W₍ₖ₎ satisfy a conjugate symmetric relationship relative to the original point. That is,${\text{G}}_{\text{(k)}} {\text{= G*}}_{\text{(m)}} {\text{and W}}_{\text{(k)}} {\text{= W*}}_{\text{(k)}}$ At that time, Fourier-transforms g₍ₘ₎ and w₍ₘ₎ become real numbers.

Arranging the energy function E by the use of this relationship yields: 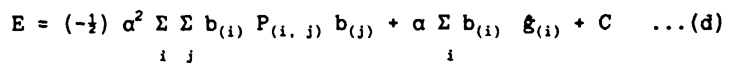 where:

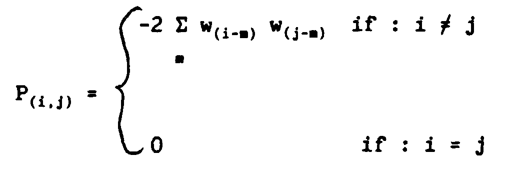

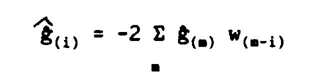

Accordingly, on the basis of equation (d) and equation (7) of the Hopfield type neural network circuit, ĝ₍ᵢ₎ assumes a threshold value of each neuron, P_{(i, j)} assumes a coupling coefficient of each synapse and b₍ᵢ₎ assumes an output of each neuron. As such, it is possible to minimize the error energy E by using the neural network circuit.

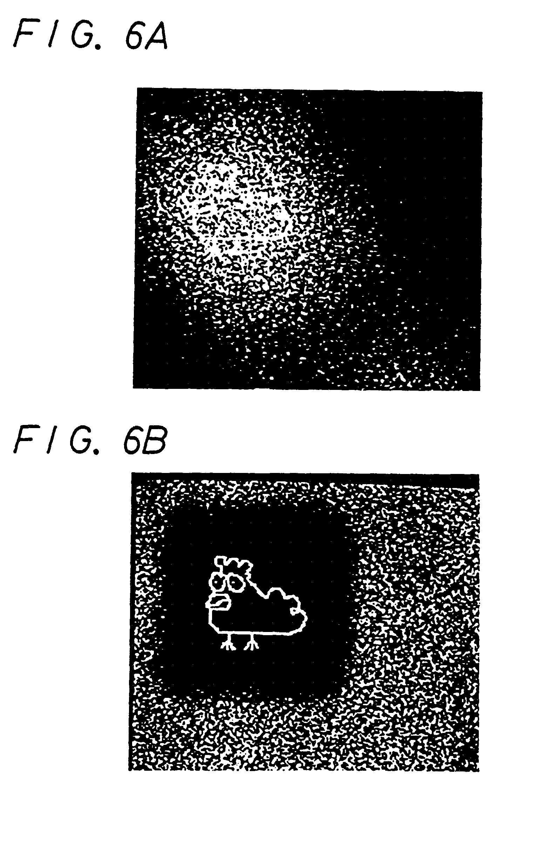

Figures 6A and 6B illustrate actual examples of reproduced video images of computer hologram. More specifically, Figure 6A shows a prior reproduced video image in which the S/N ratio is considerably deteriorated, whereas as shown in Figure 6B, an excellent reproduced video image can be produced using an embodiment of video image processing apparatus according to the present invention, in which noise is reduced in the desired portion of the video image.

As described above, with an embodiment of video image processing apparatus according to the present invention, a video image is processed by the use of the neural network circuit, whereby the analogue video image can be satisfactorily converted into a binary value and a computer hologram can be satisfactorily formed.

With the above-described video image processing apparatus, the threshold values of the respective neurons and the coupling coefficients of the respective synapses in the neural network circuit are computed on the basis of the incoming analogue video image and a predetermined function as previously described.

The difference component E between the incoming analogue video image and the binary video image is defined as: 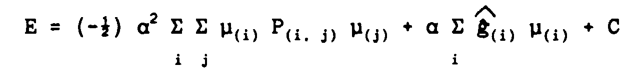 where α represents the coefficient, µ₍ᵢ₎ represents the value which results from converting the incoming analogue video image into the binary value, P_{(i, j)} represents the value which is obtained from the function, and ĝ₍ᵢ₎ is the value which is obtained from the function and the input analogue video image. As a result, it is possible to convert the input analogue video image into the binary value by using the neural network circuit.

Further, by setting the function to have the frequency characteristic as a human's eyes, it is then possible to obtain a binary video image which is visually excellent for a human's eyes.

Further, if the incoming analogue video image is a computer hologram and the function is a window function which indicates the range of the desired image of the reproduced video image which in turn results from Fourier-transforming the computer hologram, the noise in the range of the desired image in the reproduced video image can be reduced and an excellent reproduced video image can be obtained.

## Claims

1. A video image processing apparatus for converting an analogue video image into a binary video image, the apparatus comprising:
input means (1) for receiving said analogue video image;
sampling means (2) for sampling the received analogue video image;
a neural network circuit (3) having a plurality of neurons which are connected together through respective synapses;
setting means (4) for setting a predetermined function;
first computing means (5) for computing respective threshold values for each of said neurons in said neural network circuit (3) on the basis of the sampled value of the video image and said predetermined function; and
second computing means (6) for computing respective coupling coefficients for each of said synapses of said neural network circuit (3) on the basis of said predetermined function;
said neural network circuit (3) processing said threshold values and said coupling coefficients so as to form said binary video image;
characterized in that the input analogue video image is a computer hologram and said predetermined function is a window function indicative of a range of a desired image of a reproduced video image which results from Fourier-transforming said computer hologram.

2. A video image processing apparatus for converting an analogue video image into a binary video image, the apparatus comprising:
input means (1) for receiving said analogue video image;
sampling means (2) for sampling the received analogue video image;
a neural network circuit (3) having a plurality of neurons which are connected together through respective synapses;
setting means (4) for setting a predetermined function;
first computing means (5) for computing respective threshold values for each of said neurons in said neural network circuit (3) on the basis of the sampled value of the video image and said predetermined function; and
second computing means (6) for computing respective coupling coefficients for each of said synapses of said neural network circuit (3) on the basis of said predetermined function;
said neural network circuit (3) processing said threshold values and said coupling coefficients so as to form said binary video image; characterized in that the input analogue video image is a computer hologram and said predetermined function has a frequency characteristic which corresponds to that of a human's eyes.

3. Apparatus according to any one of claims 1 or 2 wherein a difference component between the input analogue video image and said binary video image is a function of the value obtained from said predetermined function, and the value obtained from said input analogue video image and said predetermined function.

## Patentansprüche

1. Videobildverarbeitungsanordnung zum Umsetzen eines analogen Videobildes in ein binäres Videobild,
mit einer Eingangseinrichtung (1) für die Aufnahme des genannten analogen Videobildes,
mit einer Abtasteinrichtung (2) zum Abtasten des aufgenommenen analogen Videobildes,
mit einer neuronalen Netzwerkschaltung (3), umfassend eine Vielzahl von Neuronen, die über entsprechende Synapsen miteinander verbunden sind,
mit einer Einstelleinrichtung (4) zum Einstellen einer bestimmten Funktion,
mit einer ersten Recheneinrichtung (5) zum Berechnen entsprechender Schwellwerte für jedes der Neuronen in der genannten neuronalen Netzwerkschaltung (3) auf der Basis des abgetasteten Wertes des Videobildes und der genannten bestimmten Funktion,
und mit einer zweiten Recheneinrichtung (6) zum Berechnen entsprechender Kopplungskoeffizienten für jede der Synapsen der genannten neuronalen Netzwerkschaltung (3) auf der Basis der genannten bestimmten Funktion,
wobei die genannte neuronale Netzwerkschaltung (3) die genannten Schwellwerte und die genannten Kopplungskoeffizienten derart verarbeitet, daß das genannte binäre Videobild gebildet ist,
**dadurch gekennzeichnet**,
daß das eingangsseitige analoge Videobild ein Computer-Hologramm ist
und daß die genannte bestimmte Funktion eine Fensterfunktion ist, die kennzeichnend ist für einen Bereich eines gewünschten Bildes eines wiedergegebenen Videobildes,
welches aus der Fourier-Transformation des genannten Computer-Hologramms resultiert.

2. Videobildverarbeitungsanordnung zum Umsetzen eines analogen Videobildes in ein binäres Videobild,
mit einer Eingangseinrichtung (1) für die Aufnahme des genannten analogen Videobildes,
mit einer Abtasteinrichtung (2) zum Abtasten des aufgenommenen analogen Videobildes,
mit einer neuronalen Netzwerkschaltung (3), umfassend eine Vielzahl von Neuronen, die über entsprechende Synapsen miteinander verbunden sind,
mit einer Einstelleinrichtung (4) zum Einstellen einer bestimmten Funktion,
mit einer ersten Recheneinrichtung (5) zum Berechnen entsprechender Schwellwerte für jedes der genannten Neuronen in der neuronalen Netzwerk-schaltung (3) auf der Basis des abgetasteten Wertes des Videobildes und der genannten bestimmten Funktion,
und mit einer zweiten Recheneinrichtung (6) zum Berechnen entsprechender Kopplungskoeffizienten für jede der Synapsen der genannten neuronalen Netzwerkschaltung (3) auf der Basis der genannten bestimmten Funktion,
wobei die genannte neuronale Netzwerkschaltung (3) die genannten Schwellwerte und die Kopplungskoeffizienten derart verarbeitet, daß das genannte binäre Videobild gebildet ist,
**dadurch gekennzeichnet**,
daß das eingangsseitige analoge Videobild ein Computer-Hologramm ist
und daß die genannte bestimmte Funktion einen Frequenzverlauf aufweist, der dem menschlicher Augen entspricht.

3. Anordnung nach Anspruch 1 oder 2, wobei eine Differenzkomponente zwischen dem eingangsseitigen analogen Videobild und dem genannten binären Videobild eine Funktion des von der genannten bestimmten Funktion erhaltenen Wertes und des von dem eingangsseitigen analogen Videobild und der genannten bestimmten Funktion erhaltenen Wertes ist.

## Revendications

1. Dispositif de traitement d'image vidéo pour convertir une image vidéo analogique en une image vidéo binaire, dispositif comportant :
des moyens d'entrée (1) pour recevoir ladite image vidéo analogique;
des moyens d'échantillonnage (2) pour échantillonner l'image vidéo analogique reçue;
un réseau neural (3) possédant une pluralité de neurones qui sont reliés les uns aux autres par l'intermédiaire de synapses respectives;
des moyens de réglage (4) pour régler une fonction prédéterminée;
des premiers moyens de calcul (5) pour calculer des valeurs de seuil respectives pour chacun desdits neurones dans ledit réseau neural (3) en fonction de la valeur échantillonnée de l'image vidéo et de ladite fonction prédéterminée; et
des seconds moyens de calcul (6) pour calculer les coefficients de couplage respectifs pour chacune desdites synapses dudit réseau neural (3) en fonction de ladite fonction prédéterminée;
ledit réseau neural (3) traitant lesdites valeurs de seuil et lesdits coefficients de couplage de manière à former ladite image vidéo binaire; caractérisé en ce que l'image vidéo analogique d'entrée est un hologramme de calculateur et ladite fonction prédéterminée est une fenêtre de fonction représentative d'une plage d'une image souhaitée d'une image vidéo reproduite qui résulte de la modification dudit hologramme de calculateur par transformation de Fourier.

2. Dispositif de traitement d'image vidéo pour convertir une image vidéo analogique en une image vidéo binaire, dispositif comportant :
des moyens d'entrée (1) pour recevoir ladite image vidéo analogique;
des moyens d'échantillonnage (2) pour échantillonner l'image vidéo analogique reçue;
un réseau neural (3) possédant une pluralité de neurones qui sont reliés les uns aux autres par des synapses respectives;
des moyens de réglage (4) pour régler une fonction prédéterminée;
des premiers moyens de calcul (5) pour calculer les valeurs de seuil respectives pour chacun desdits neurones dans ledit réseau neural (3) en fonction de la valeur échantillonnée de l'image vidéo et de ladite fonction prédéterminée; et
des seconds moyens de calcul (6) pour calculer des coefficients de couplage respectifs pour chacune desdites synapses dudit réseau neural (3) en fonction de ladite fonction prédéterminée;
ledit réseau neural (3) traitant lesdites valeurs de seuil et lesdits coefficients de couplage afin de former ladite image vidéo binaire; caractérisé en ce que l'image vidéo analogique d'entrée est un hologramme de calculateur et ladite fonction prédéterminée possède une caractéristique de fréquence qui correspond à celle de l'oeil humain.

3. Dispositif selon l'une quelconque des revendications 1 ou 2, dans lequel une composante de différence entre l'image vidéo analogique d'entrée et ladite image vidéo binaire est une fonction de la valeur obtenue à partir de ladite fonction prédéterminée, et la valeur obtenue à partir de ladite image vidéo analogique d'entrée et de ladite fonction prédéterminée.
